# EUROPEAN PATENT APPLICATION

(11) **EP 2 103 486 A2**
(43) Date of publication of application: **23.09.2009**
(21) Application number: 09155660.5
(22) Date of filing: 19.03.2009
(51) Int. Cl.: B60R 5/04, B60R 7/02

(54) **Improved case set for cars**

(30) Priority: 20.03.2008 IT VI20080068
(71) Applicant: Frighetto, Giordano, 36071 Arzignano (IT)
(72) Inventor: Frighetto, Giordano, 36071 Arzignano (IT)
(74) Representative: Bonini, Ercole

(57) **Abstract**

The invention concerns a set of cases (1; 10) comprising two or more cases arranged in such a way as to be substantially coplanar and side by side. The cases (1a; 2a; 10a) define an external perimetral edge (3; 13) that can be conjugated with the internal perimetral edge (4) of the luggage compartment (2) of a car. One or more cases (1a; 2a; 10a) is provided with a cover (5; 50) that can be opened to reach the inside of the cases (1a; 2a; 10a). The internal perimetral edge (6; 12) of the cover is contained within the external perimetral edge (3; 13) of the surface of each one of the cases (1 a; 2a; 10a) on which the cover (5; 50) is carried out.

## Description

The present invention concerns an improved set of cases to be placed inside the luggage compartment of cars.

As is known, the luggage compartments of cars may have variable capacity, depending on their depth and also on the dimensions of the car itself, in order to contain bags and/or cases of any size.

Especially when several persons use the same car before leaving for a long journey, it is often necessary to fill the luggage compartment with a series of cases and/or bags.

In particular, during long journeys it is often necessary to stop in the apposite areas or in proximity to bars and/or restaurants, and to open one or more of the cases that are arranged in the luggage compartment in order to take some personal belongings.

If these cases are positioned beside other cases, it is impossible to open one of them without lifting it from the compartment and resting it, for example, on the hood.

This causes a drawback represented by the fact that it is always necessary to lift the cases before being able to open them and take or put away personal belongings.

Furthermore, the fact that it is necessary to lift and then put back the case, especially if it is heavy, involves a physical effort that may be harmful especially for those persons who suffer from problems at the back, like for example scoliosis.

The object of the present invention is to carry out a set of cases for cars which do not force the user to continuosly lift and put back one or more of them when he/she needs to take or put away any personal belongings.

The object mentioned above is achieved by the present invention which proposes a set of cases for car trunks whose main characteristics are in accordance with claim 1.

Advantageously, the set of cases carried out according to the invention ensures the availability of a plurality of cases, from/in each one of which it is possible to take/put away objects, even using more than one case at the same time.

Still advantageously, the set of cases carried out according to the invention defines at its top a base for resting further cases, objects, bags or similar items thereon.

The objects and advantages described above will be highlighted in greater detail in the description of a preferred embodiment of the invention that is supplied as an indicative, non-limiting example with reference to the enclosed drawings, wherein:
- Figure 1 shows an axonometric view of a luggage compartment containing the set of cases carried out according to the invention;
- Figure 2 shows a side view of a case belonging to the set of cases of Figure 1 arranged inside a luggage compartment;
- Figure 3 shows a detail of a case belonging to the set of cases shown in Figure 1;
- Figure 4 shows an axonometric view of a construction variant of the set of cases shown in Figure 1.

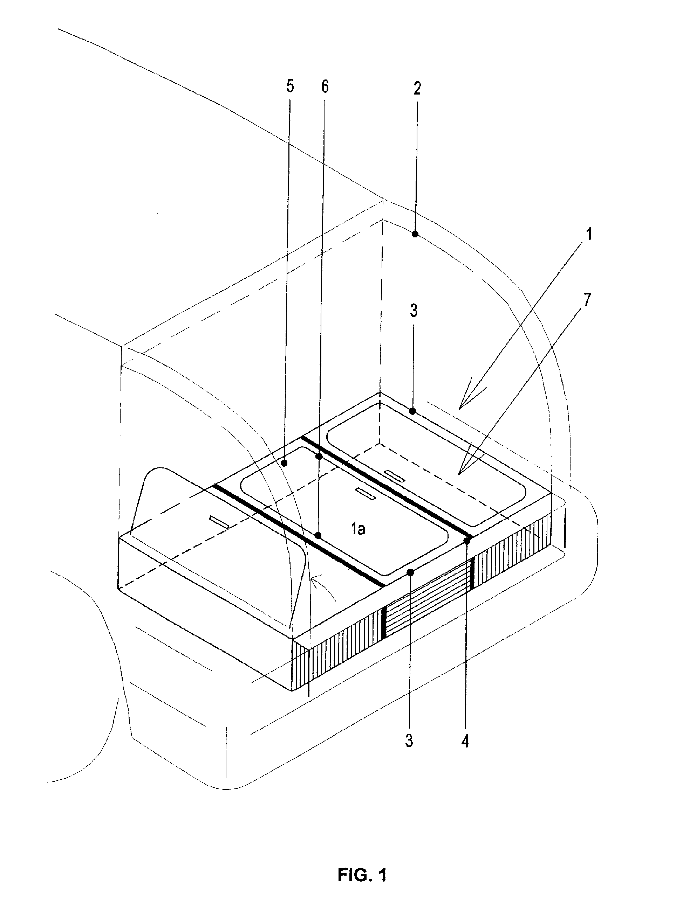

As shown in Figure 1, the set of cases indicated as a whole by **1** comprises three coplanar cases **1a** positioned side by side and housed in a luggage compartment **2** of a car.

According to the present invention, said cases **1a** define an external perimetral edge **3** that can be conjugated with the internal perimetral edge **4** of the luggage compartment **2** of the car and each one of them is provided with a cover **5** that can be opened in order to reach its inside.

The internal perimetral edge **6** of the cover **5** is contained inside the external perimetral edge **3** of the surface **7** on which the cover **5** is carried out.

As can be noted in the construction form shown in Figure 1, the surface **8** rests directly on the bottom of the luggage compartment **2** of the car itself.

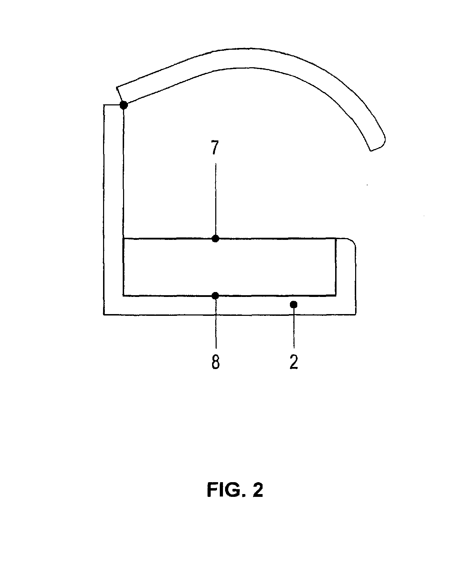

As can be noted in Figure 2, the surface **7** is opposite the surface **8** facing towards the bottom of the luggage compartment **2** of the car.

The surface **7,** in turn, will constitute a new surface suitable for supporting other pieces of luggage.

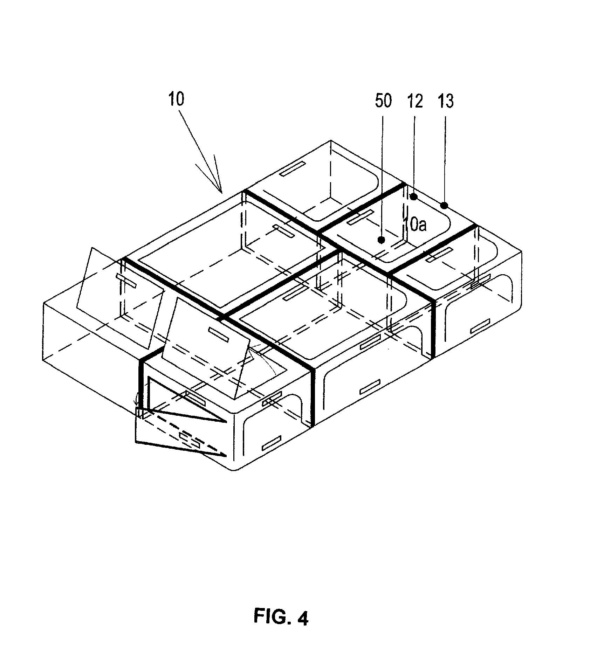

As shown in Figure 1, the cover **5** of each one of the cases **1a** illustrated therein is contained within the surface **7,** but the cover may also be smaller, as shown in Figure 4.

In this construction variant, each case **10a** of the case set **10** shown in Figure 4 differs from the construction form of Figure 1 due to the fact that now the internal perimetral edge **12** of the cover **50** is more recessed in relation to the external upper perimetral edge **13.**

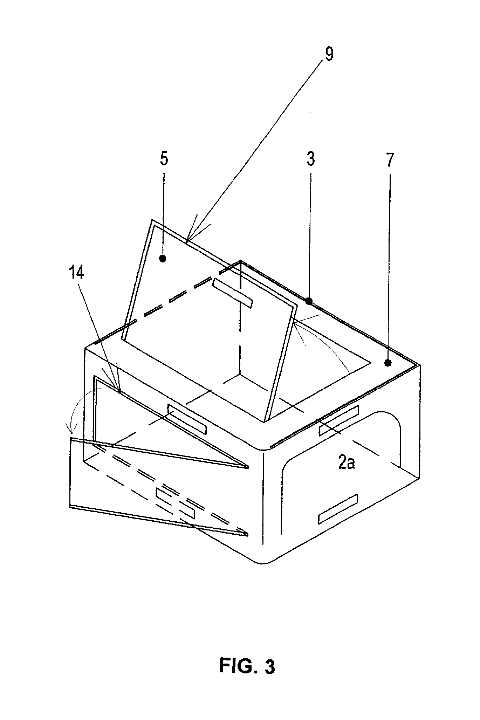

In the detail shown in Figure 3 it can be noticed that the cover **5** of the cases **2a** is rotatingly connected to the surface **7** through hinge means **9** that are recessed with respect to the hinges **14** belonging to the external perimetral edge **3** of the cases **2a.**

According to a construction variant not illustrated in the figures, the cover **5** of each case may be connected to the surface **7** through elastic means, like for example springs.

According to a preferred embodiment of the invention, illustrated in the side view of Figure 2, the height of the cases carried out according to the present invention is such as to coincide with the depth of the luggage compartment **2.**

This preferred embodiment of the invention will allow the user to easily take or put away any items with no need to bend excessively, while at the same time offering him/her a supporting surface that is at the level of the opening of the luggage compartment.

According to a construction variant not illustrated herein, the case of the invention, instead of resting directly on the bottom of the luggage compartment, can be supported by a bearing frame properly shaped in such a way as to contain the supporting surface of the case itself.

Therefore, the set of cases carried out according to the invention may consist of cases made of a flexible material (for example, leather), if these are supported by said bearing frame.

If the set of cases carried out according to the invention is not provided with a bearing frame, then the cases will preferably be made of a rigid material.

The set of cases carried out according to the present invention may comprise any number of cases having different sizes, always taking into account the dimensions of the luggage compartment of the car.

In this way, the set of cases carried out according to the present invention can be used both for small and large cars like sedans and station wagons.

According to a further construction variant not represented herein, the set of cases carried out according to the present invention can be covered by a cloth provided inside the luggage compartment.

The above clearly shows that the set of cases carried out according to the present invention allows each case to be easily opened with no need for the user to make any effort to lift it, while at the same time offering a comfortable travel set that constitutes a useful supporting base for other bags or cases.

The set of cases carried out according to the present invention can be subjected to modifications that must all be considered protected by the present patent, provided that they fall within the scope of the following claims.

In the cases where the technical characteristics illustrated in the claims are followed by references, these have been added only with the aim to facilitate the comprehension of the claims themselves and therefore said references do not have any limiting effect on the degree of protection to be granted to each element they identify only by way of example.

## Claims

1. Set of cases (1; 10) comprising two or more cases (1a; 2a; 10a) arranged in such a way as to be substantially coplanar and side by side, **characterized in that** said cases (1a; 2a; 10a) define an external perimetral edge (3; 13) that can be conjugated with the internal perimetral edge (4) of the luggage compartment (2) of a car, one or more of said cases (1a; 2a; 10a) being provided with at least one cover (5; 50) that can be opened to reach the inside of said cases (1a; 2a; 10a), and wherein the internal perimetral edge (6; 12) of said at least one cover (5; 50) is contained within the external perimetral edge (3; 13) of the surface (7) of each one of said cases (1a; 2a; 10a) on which said at least one cover (5; 50) is carried out.

2. Set of cases (1; 10) according to claim 1), **characterized in that** the surface (8) of each one of said cases (1a; 2a; 10a) facing towards the bottom of said luggage compartment (2) is supported by a bearing frame.

3. Set of cases (1; 10) according to claim 1), **characterized in that** the surface (8) of each one of said cases (1a; 2a; 10a) facing towards the bottom of said luggage compartment (2) rests on the bottom of said luggage compartment (2).

4. Set of cases (1; 10) according to any one of the preceding claims, **characterized in that** said at least one cover (5; 50) is rotatingly connected to the surface (7) opposite said surface (8) facing towards the bottom of said luggage compartment (2) through hinge means (14).

5. Set of cases (1; 10) according to any one of the claims from 1) to 4), **characterized in that** said at least one cover (5; 50) is connected to the surface (7) opposite said surface (8) facing towards the bottom of said luggage compartment (2) through elastic means.

6. Set of cases (1; 10) according to claim 5), **characterized in that** said elastic means are springs.

7. Set of cases (1; 10) according to any one of the preceding claims, **characterized in that** said cases (1a; 2a; 10a) arranged side by side define at the top a substantially flat bearing surface suited to support one or more objects.
